# EUROPEAN PATENT SPECIFICATION

(11) **EP 4 286 256 B1**
(45) Date of publication and mention of the grant of the patent: **02.12.2026**
(21) Application number: 21921752.8
(22) Date of filing: 27.01.2021
(51) Int. Cl.: B62D 25/24, B60L 53/16

(54) **AUTOMOBILE CHARGING PORT COVER STRUCTURE, AND AUTOMOBILE**
ABDECKUNGSSTRUKTUR FÜR EINEN FAHRZEUGLADEANSCHLUSS UND FAHRZEUG
STRUCTURE DE COUVERCLE DE PRISE DE RECHARGE D'AUTOMOBILE ET AUTOMOBILE

(43) Date of publication of application: 06.12.2023
(73) Proprietor: Zhejiang Smart Intelligence Technology Co., Ltd., Ningbo, Zhejiang 315336 (CN)
(72) Inventor: SHAO, Shichao, Hangzhou Bay New District Ningbo, Zhejiang 315336 (CN); SONG, Yongle, Hangzhou Bay New District Ningbo, Zhejiang 315336 (CN); FU, Qiang, Hangzhou Bay New District Ningbo, Zhejiang 315336 (CN); CHEN, Xiaolei, Hangzhou Bay New District Ningbo, Zhejiang 315336 (CN); CHEN, Tao, Hangzhou Bay New District Ningbo, Zhejiang 315336 (CN); ZHANG, Xia, Hangzhou Bay New District Ningbo, Zhejiang 315336 (CN)
(74) Representative: Zaboliene, Reda
(86) International application number: PCT/CN2021/073989
(87) International publication number: WO 2022/160132

(56) References cited:
- WO-A1-2012/161087
- CN-A- 105 620 301
- CN-A- 107 351 921
- CN-A- 110 979 476
- CN-U- 207 758 889
- CN-U- 207 758 889
- CN-U- 209 833 788
- DE-A1- 102016 120 760
- DE-A1- 102016 120 760
- US-A- 5 906 406
- US-B2- 9 083 163

## Description

### TECHNICAL FIELD

The present application relates to the technical field of electric vehicle accessories, and in particular to automobile comprising an automobile charging port cover structure.

### BACKGROUND

With development of technology and increasement of people's awareness of environmental protection, electric vehicles, as main new energy vehicles, are more and more recognized by consumers.

On the current market, layout positions of integrated charging port covers equipped for electric vehicles are mainly concentrated at front grilles and rear side walls, especially front grilles. When being arranged at the front grilles, the charging port covers are integrated with grille profiling and are mainly opened using four-bar linkages, and sizes are generally larger; when being arranged at the rear side walls, depths of mouth boxes are deep, and human-machine perception to insertion of guns is poor.

In a reference document D1 (WO2012/161087A1), an assembly (10) comprises: an inlet box (20) comprising an opening (22) which is attached to an outer panel (2) of a vehicle; a cover (30) for opening/closing the opening (22) in the inlet box (20); and a hinge mechanism (40) for linking the cover (30) to the inlet box (20). The assembly (10) further comprises: a pressure mechanism (60) for pressing the cover (30) in the direction of opening from inside the inlet box (20); an illumination device (27) provided inside the inlet box (20); and a switch (28) for switching on the illumination device (27) by means of an ON operation and for switching off the illumination device (27) by means of an OFF operation. The switch (28) performs an ON operation when subjected to an operation in which the pressure mechanism (60) presses the cover (30) in the direction of opening, and performs an OFF operation when subjected to an operation in which the cover (30) is opened and the pressure mechanism (60) is pressed in.

Document D2 (CN207758889U) is also disclosing a vehicle with integrated charging port structure.

### SUMMARY OF THE DISCLOSURE

The technical problem to be solved by the present application is the problem that in the prior art, a size of an automobile charging port cover is relatively large, layout space is occupied, and human-machine perception to inserting of a nozzle is poor.

The invention is set out in the appended set of claims.

The automobile charging port cover structure disclosed by the present application comprises a charging port box body, a hinge box body, a hinge box cover plate, and an actuator; the hinge box body is connected to a side wall of the charging port box body, and the hinge box body comprises a first receiving cavity having a first opening; the hinge box cover plate is detachably matched with the hinge box body, and the hinge box cover plate is configured to cover the first opening; one end of the actuator is connected to the charging port box body, and an other end of the actuator is embedded on vehicle body assembly sheet metal of the automobile. By arranging the actuator on the automobile sheet metal, a transverse size of the automobile charging port cover structure is reduced. By separating and individually molding the hinge box body and the hinge box cover plate, a depth of the automobile charging port cover structure can be reduced. Thus, the problem in the prior art that a whole size of an automobile charging port cover is relatively large, layout space is occupied, and human-machine perception to inserting of a nozzle is poor is solved.

### BRIEF DESCRIPTION OF THE DRAWINGS

In order to explain technical solutions of embodiments of the present application more clearly, drawings required to be used in description of the embodiments will be briefly introduced below.
FIG. 1 is a structural schematic view of an automobile charging port cover structure according to the present application.
FIG. 2 is a partial structural schematic view of an automobile charging port cover structure according to the present application.
FIG. 3 is a schematic view of a position of an actuator of an automobile charging port cover structure according to the present application.
FIG. 4 is a structural schematic view of a shelter plate of an automobile charging port cover structure according to the present application.
FIG. 5 is a schematic view of assembly of a shelter plate and a charging port box body of an automobile charging port cover structure according to the present application.

In the drawings: 1-charging port box body; 2-hinge box body; 3-hinge box cover plate; 4-actuator; 5-vehicle body sheet metal; 6-charging port box cover plate; 61-covering portion; 62-connecting portion; 7-charging seat; 8-shelter plate.

### DETAILED DESCRIPTION

In order to make persons in the technical field better understand the schemes of the present application, the technical solutions in the embodiments of the present application will be described clearly and completely below in combination with the drawings in the embodiments of the present application.

"An/one embodiment" or "embodiment" herein referred to means a specific feature, structure or feature that can be included in at least one implementation of the present application. In the description of the present application, it should be understood that orientations or position relationships indicated by the terms "up", "top", "bottom", and so on are based on orientations or position relationships shown in the attached drawings, which are only intended to facilitate describing the present application and simplifying the description, rather than indicating or implying that a device or element referred to must have a specific orientation, or be constructed and operated in a specific orientation, and thus should not be understood as any limit to the present application. In addition, the terms "first" and "second" are only used for describing purposes, and should not be understood as indicating or implying relative importance or implicitly indicating the number of indicated technical features. Therefore, the features defined as "first" and "second" can explicitly or implicitly include one or more such features. Moreover, the terms "first", "second" and the like are used to distinguish similar objects, and need not be used to describe a specific sequence or order. It should be understood that data used in this way can be interchanged in appropriate cases, so that the embodiments of the present application described herein can be implemented in order other than those illustrated or described herein.

In order to solve the above technical problem, the present application discloses an automobile charging port cover structure and an automobile.

According to one aspect of the present application, an automobile charging port cover structure is provided.

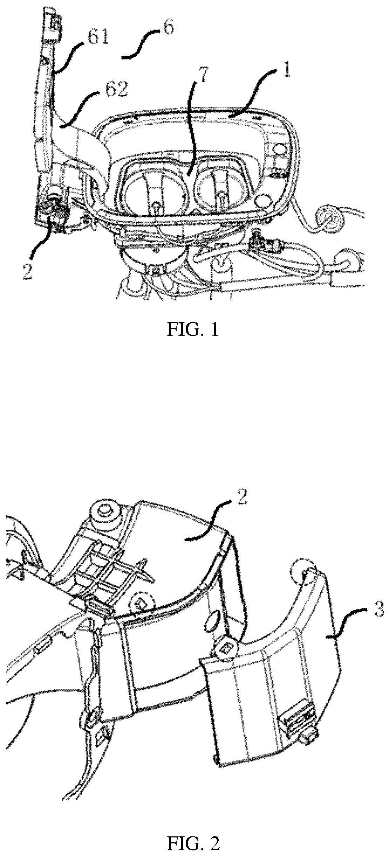

In a manner that may be implemented, as shown in FIG. 1 to FIG. 5, the automobile charging port cover structure includes a charging port box body 1, a hinge box body 2, a hinge box cover plate 3, and an actuator 4. Preferably, the charging port box body 1 can be made of iron material, can also be made of stainless steel material, and further can be made of aluminum material, its specific material is not limited. The charging port box cover plate 6 can be made of iron material, can also be made of stainless steel material, and further can be made of aluminum material; alternatively, the charging port box cover plate 6 can also be made of rubber material.

Specifically, as shown in FIG. 1 and FIG. 2, the hinge box body 2 is connected to a side wall of the charging port box body 1, and the hinge box body 2 includes a first receiving cavity having a first opening; the hinge box cover plate 3 is detachably matched with the hinge box body 2, and the hinge box cover plate 3 is configured to cover the first opening.

In an implementable solution, The hinge box body 2 can further include a connecting plate arranged corresponding to the first opening, the connecting plate is connected to a side wall of the hinge box body 2. The first receiving cavity is formed by enclosing on the basis of a side wall of the hinge box body 2, and the hinge box body 2 is connected to a side wall of the charging port box body 1 through the connecting plate.

In another implementable solution, the hinge box body 2 can further include a third opening arranged corresponding to the first opening; the hinge box body 2, through a side wall of the hinge box body 2, is connected to a side wall of the charging port box body 1, the first receiving cavity is formed by enclosing on the basis of a side wall of the hinge box body 2 and the charging port box body 1.

Preferably, the hinge box body 2 is integrally formed with the charging port box body 1.

Furthermore, in a manner that may be implemented, the hinge box cover plate 3 is provided with a first snapping member, and the hinge box body 2 is provided with a second snapping member. When the first snapping member is matched with the second snapping member, matching between the hinge box cover plate 3 and the hinge box body 2 is achieved. Preferably, the first snapping member is a snapping buckle, and the second snapping member is a clamping trough. Alternatively, the first snapping member is a clamping trough, and the second snapping member is a snapping buckle.

In another manner that may be implemented, the hinge box cover plate 3 is connected by screw bolts with the hinge box body 2.

It can be understood that by separating and individually molding the hinge box body 2 and the hinge box cover plate 3, a depth of the automobile charging port cover structure can be reduced. Furthermore, By arranging the actuator 4 on vehicle body sheet metal 5 of an automobile, a transverse size of the automobile charging port cover structure is reduced, at the same time, it is possible to optimize structural avoidance and improve aesthetics of the automobile charging port cover structure.

Specifically, compared with the prior art, a size of the automobile charging port cover structure according to the present application can be shortened by 5mm-10mm in length, can be shortened by 5mm-10mm in width, and can be shortened by 10mm-20mm in depth. Preferably, in an implementable solution, the automobile charging port cover structure can be shortened to between 240mm and 235mm in length, can be shortened to between 170mm and 165mm in width, and can be shortened to between 45mm and 40mm in depth.

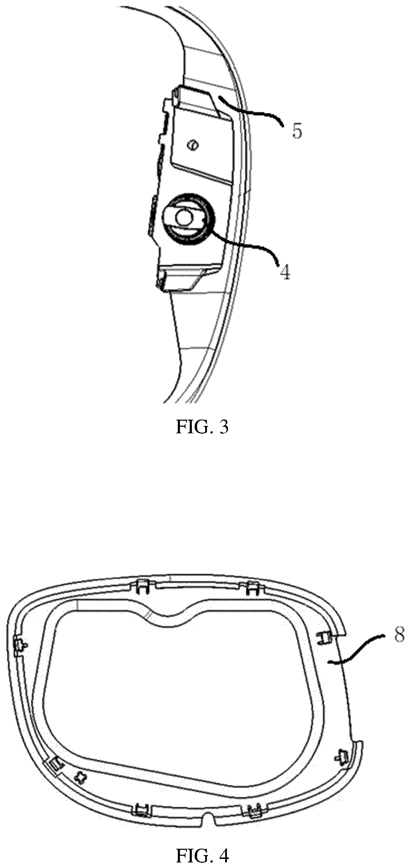

Furthermore, as shown in FIG. 3, one end of the actuator 4 is connected to the charging port box body 1, and an other end of the actuator 4 is embedded on vehicle body sheet metal 5 of an automobile.

Furthermore, as shown in FIG. 1, the automobile charging port cover structure further includes a charging port box cover plate 6, the charging port box cover plate 6 is connected to the hinge box body 2.

In some implementable solutions, the charging port box cover plate 6 includes a covering portion 61 and a connecting portion 62. One end of the covering portion 61 is connected to the connecting portion 62, and another end of the covering portion 61 is provided with a third snapping member, the third snapping member is configured to be matched with a fourth snapping member of the charging port box body 1. The covering portion 61 is specifically configured to close the first opening of the charging port box body 1 when the third snapping member is matched with the fourth snapping member such that the charging port box cover plate 6 covers on the charging port box body 1. Preferably, the covering portion 61 includes a first side surface and a second side surface, when the charging port box cover plate 6 covers on the charging port box body 1, the second side surface closes the first opening. Preferably, the first side surface is provided thereon with reinforcing ribs.

One end of the connecting portion 62 is connected to the covering portion 61, and another end of the connecting portion 62 is connected to the hinge box body 2. Preferably, the covering portion 61 can be made of any one of iron material, stainless material, aluminum material, etc., and the connecting portion 62 is made of rubber material. It can be understood that by setting the connection part 62 to be made of rubber material, it is possible to facilitate opening or closing of the charging port box cover plate 6 based on the soft nature of the rubber material itself, and it is also possible to improve covering sealing performance between the charging port box cover plate 6 and the charging port box body 1.

Preferably, the third snapping member is a snapping buckle, and the fourth snapping member is a clamping trough. Alternatively, the third snapping member is a clamping trough, and the fourth snapping member is a snapping buckle. In an implementable solution, the charging port box cover plate 6 is rotatably connected to the hinge box body 2 through a rotation member, the rotation member is at least partially arranged in the first receiving cavity. Preferably, the rotation member can be a rotation shaft or a hinge.

Furthermore, the charging port box cover plate 6 is moveable between a first position and a second position relative to the charging port box body 1, and the charging port box body 1 is arranged in such a way that the charging port box body 1 is closed when the charging port box cover plate 6 is in the first position relative to the charging port box body 1, and the charging port box body 1 is opened when the charging port box cover plate 6 is in the second position relative to the charging port box body 1. Specifically, the charging port box body 1 includes a second receiving cavity having a second opening, and the charging port box cover plate 6 is arranged in such a way that the charging port box cover plate 6 covers on the second opening when the charging port box cover plate 6 is in the first position relative to the charging port box body 1.

According to the invention, the charging port box body 1 is arranged in such a way that the charging port box body 1 is closed when the charging port box cover plate 6 is in the first position relative to the charging port box body 1, and the charging port box body 1 is opened when the charging port box cover plate 6 is in the second position relative to the charging port box body 1. In other implementable manners, the charging port box body 1 can also be arranged in such a way that the charging port box body 1 is opened when the charging port box cover plate 6 is in the first position relative to the charging port box body 1, and the charging port box body 1 is closed when the charging port box cover plate 6 is in the second position relative to the charging port box body 1.

Moreover, when the charging port box body 1 is opened, the first position or the second position of the charging port box cover plate 6 relative to the charging port box body 1 can refer to the charging port box cover plate 6 being opened by a preset angle relative to the charging port box body 1, the preset angle can be 30°, 45°, 60°, or 90°; the specific angle degree value can be set according to actual needs, and is not specifically limited here.

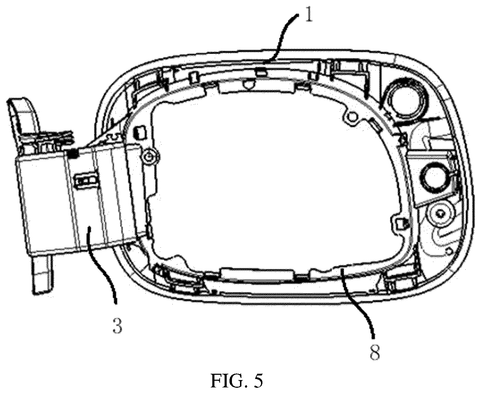

Furthermore, as shown in FIG. 4 and FIG. 5, the automobile charging port cover structure further includes a shelter plate 8, the charging port box body 1 further includes a base arranged corresponding to the second opening, and the shelter plate 8 is matched with the base of the charging port box body 1.

According to the invention, the automobile charging port cover structure further includes a charging seat 7 mounted on the vehicle body sheet metal 5, the base can be constructed as an extension plate with an opening, and an outer edge of the extension plate matches an outer edge of the charging seat 7 in the second receiving cavity in shape. The second receiving cavity can be specifically constructed as a receiving space for the charging seat 7 mounted on the vehicle body sheet metal 5. Specifically, after being accommodated in the second receiving cavity, the charging seat 7 further has an extended structure that extends out of the second receiving cavity. The extended structure of the charging seat 7 is mounted on a vehicle body bracket of the vehicle body sheet metal 5 to achieve mounting and fixing of the charging seat 7.

In an implementable solution, the charging seat 7 is connected to the vehicle body sheet metal 5 through a fixing member; specifically, the charging seat 7 is connected to the vehicle body bracket of the vehicle body sheet metal 5 through the fixing member; specifically, the fixing member is arranged in such a way that the fixing member is shielded by the shelter plate 8 when the shelter plate 8 covers on the base.

Preferably, the shelter plate 8 is snap-fitted to the base through a snapping member, and the shelter plate 8 covers on a side surface of the base facing away from the second opening. In an implementable solution, the base can be provided thereon with a plurality of fifth snapping members, and the shelter plate 8 can be provided thereon with a plurality of sixth snapping members, connection between the shelter plate 8 and the base is implemented by matching between the fifth snapping members and the sixth snapping members. Preferably, the fifth snapping members are snapping buckles, and the sixths snapping members are clamping troughs; alternatively, the fifth snapping member are clamping troughs, and the sixth snapping members are snapping buckles.

Furthermore, the charging port box body 1 is further provided with a charging indicator light, the charging indicator light is configured to give a prompt when the charging seat 7 is powered on or powered off.

In an implementable solution, a first sealing soft glue is arranged at a connection edge between the shelter plate 8 and the charging seat 7, and a second sealing soft glue is arranged between the shelter plate 8 and a side wall of the charging port box body 1. It can be understood that by arranging the first sealing soft glue, it is used to achieve sealing between the shelter plate 8 and the charging base 7; and by arranging the second sealing soft glue, it is used to achieve sealing between the shelter plate 8 and the side wall of the charging port box body 1. By the arrangement of the first sealing soft glue, it is possible to avoid the shelter plate 8 from being in direct contact with the charging seat 7, and avoid hardware contact and abrasion between the shelter plate 8 and the charging seat 7; by the arrangement of the second sealing soft glue, it is possible to avoid the shelter plate 8 from being in direct contact with the charging port box body 1, and avoid hardware contact and abrasion between the shelter plate 8 and the charging port box body.

According to the invention, an automobile is provided, the automobile includes the above automobile charging port cover structure.

The automobile charging port cover structure disclosed by the present application includes a charging port box body, a hinge box body, a hinge box cover plate, and an actuator; the hinge box body is connected to a side wall of the charging port box body, and the hinge box body includes a first receiving cavity having a first opening; the hinge box cover plate is detachably matched with the hinge box body, and the hinge box cover plate is configured to cover the first opening; one end of the actuator is connected to the charging port box body, and an other end of the actuator is embedded on vehicle body assembly sheet metal of an automobile. By arranging the actuator on the automobile sheet metal, a transverse size of the automobile charging port cover structure is reduced. By separating and individually molding the hinge box body and the hinge box cover plate, a depth of the automobile charging port cover structure can be reduced. Thus, the problem in the prior art that a whole size of an automobile charging port cover is relatively large, layout space is occupied, and human-machine perception to inserting of a nozzle is poor is solved.

## Claims

1. An automobile comprising an automobile charging port cover structure, wherein
the automobile charging port cover structure comprising a charging port box body (1), a hinge box body (2), a hinge box cover plate (3), and an actuator (4); wherein the hinge box body (2) is connected to a side wall of the charging port box body (1), and the hinge box body (2) comprises a first receiving cavity having a first opening; the hinge box cover plate (3) is detachably matched with the hinge box body (2), and the hinge box cover plate (3) is configured to cover the first opening; one end of the actuator (4) is connected to the charging port box body (1), and an other end of the actuator (4) is configured to be embedded on vehicle body sheet metal (5) of an automobile;
wherein the automobile charging port cover structure further comprises a charging port box cover plate (6) connected to the hinge box body (2), the charging port box cover plate (6) is rotatably connected to the hinge box body (2) through a rotation member, the rotation member is at least partially arranged in the first receiving cavity, the charging port box cover plate (6) is moveable between a first position and a second position relative to the charging port box body (1), and the charging port box body (1) is arranged in such a way that the charging port box body (1) is closed when the charging port box cover plate (6) is in the first position relative to the charging port box body (1), and the charging port box body (1) is opened when the charging port box cover plate (6) is in the second position relative to the charging port box body (1);
wherein the charging port box body (1) comprises a second receiving cavity having a second opening, and the charging port box cover plate (6) is arranged in such a way that the charging port box cover plate (6) covers on the second opening when the charging port box cover plate (6) is in the first position relative to the charging port box body (1);
wherein the automobile charging port cover structure further comprises a shelter plate (8), the charging port box body (1) further comprises a base corresponding to the second opening, and the shelter plate (8) is matched with the base of the charging port box body (1);
wherein the automobile charging port cover structure further comprises a charging seat (7) configured to be mounted on the vehicle body sheet metal (5), the second receiving cavity is constructed as a receiving space for the charging seat (7);
wherein the charging seat (7) is configured to be connected to the vehicle body sheet metal (5) through a fixing member, the fixing member is configured to be arranged in such a way that the fixing member is shielded by the shelter plate (8) when the shelter plate (8) covers on the base.

2. The automobile according to claim 1, wherein the charging port box cover plate (6) comprises a covering portion (61) made of any one of iron material, stainless material, and aluminum material, and a connecting portion (62) made of rubber material.

3. The automobile according to claim 1, further comprising a first sealing soft glue arranged at a connection edge between the shelter plate (8) and the charging seat (7), and a second sealing soft glue arranged between the shelter plate (8) and a side wall of the charging port box body (1).

## Patentansprüche

1. Kraftfahrzeug, umfassend eine Ladeanschlussabdeckstruktur eines Kraftfahrzeugs, wobei
die Ladeanschlussabdeckstruktur eines Kraftfahrzeugs einen Ladeanschlussgehäusekörper (1), einen Scharniergehäusekörper (2), eine Scharniergehäuseabdeckplatte (3) und einen Aktor (4) umfasst; wobei der Scharniergehäusekörper (2) mit einer Seitenwand des Ladeanschlussgehäusekörpers (1) verbunden ist und der Scharniergehäusekörper (2) eine erste Aufnahmeaussparung mit einer ersten Öffnung umfasst; die Scharniergehäuseabdeckplatte (3) lösbar an den Scharniergehäusekörper (2) angepasst ist und die Scharniergehäuseabdeckplatte (3) dazu konfiguriert ist, die erste Öffnung abzudecken; ein Ende des Aktors (4) mit dem Ladeanschlussgehäusekörper (1) verbunden ist und ein anderes Ende des Aktors (4) dazu konfiguriert ist, an einem Fahrzeugkarosserieblech (5) eines Kraftfahrzeugs eingebettet zu werden;
wobei die Ladeanschlussabdeckstruktur eines Kraftfahrzeugs ferner eine Ladeanschlussgehäuseabdeckplatte (6) umfasst, die mit dem Scharniergehäusekörper (2) verbunden ist, wobei die Ladeanschlussgehäuseabdeckplatte (6) über ein Rotationselement drehbar mit dem Scharniergehäusekörper (2) verbunden ist, das Rotationselement zumindest teilweise in der ersten Aufnahmeaussparung angeordnet ist, die Ladeanschlussgehäuseabdeckplatte (6) zwischen einer ersten Position und einer zweiten Position relativ zum Ladeanschlussgehäusekörper (1) bewegbar ist, und der Ladeanschlussgehäusekörper (1) derart angeordnet ist, dass der Ladeanschlussgehäusekörper (1) geschlossen ist, wenn sich die Ladeanschlussgehäuseabdeckplatte (6) in der ersten Position relativ zum Ladeanschlussgehäusekörper (1) befindet, und der Ladeanschlussgehäusekörper (1) geöffnet ist, wenn sich die Ladeanschlussgehäuseabdeckplatte (6) in der zweiten Position relativ zum Ladeanschlussgehäusekörper (1) befindet;
wobei der Ladeanschlussgehäusekörper (1) eine zweite Aufnahmeaussparung mit einer zweiten Öffnung umfasst und die Ladeanschlussgehäuseabdeckplatte (6) derart angeordnet ist, dass die Ladeanschlussgehäuseabdeckplatte (6) die zweite Öffnung abdeckt, wenn sich die Ladeanschlussgehäuseabdeckplatte (6) in der ersten Position relativ zum Ladeanschlussgehäusekörper (1) befindet;
wobei die Ladeanschlussabdeckstruktur eines Kraftfahrzeugs ferner eine Schutzplatte (8) umfasst, der Ladeanschlussgehäusekörper (1) ferner eine der zweiten Öffnung entsprechende Basis umfasst und die Schutzplatte (8) an die Basis des Ladeanschlussgehäusekörpers (1) angepasst ist;
wobei die Ladeanschlussabdeckstruktur eines Kraftfahrzeugs ferner einen Ladesitz (7) umfasst, der dazu konfiguriert ist, am Fahrzeugkarosserieblech (5) montiert zu werden, wobei die zweite Aufnahmeaussparung als Aufnahmeraum für den Ladesitz (7) ausgebildet ist;
wobei der Ladesitz (7) dazu konfiguriert ist, über ein Befestigungselement mit dem Fahrzeugkarosserieblech (5) verbunden zu werden, wobei das Befestigungselement dazu konfiguriert ist, derart angeordnet zu werden, dass das Befestigungselement von der Schutzplatte (8) abgeschirmt wird, wenn die Schutzplatte (8) die Basis abdeckt.

2. Kraftfahrzeug nach Anspruch 1, wobei die Ladeanschlussgehäuseabdeckplatte (6) einen Abdeckabschnitt (61) aus einem beliebigen von Eisenmaterial, rostfreiem Material und Aluminiummaterial sowie einen Verbindungsabschnitt (62) aus Gummimaterial umfasst.

3. Kraftfahrzeug nach Anspruch 1, ferner umfassend einen ersten weichen Dichtungskleber, der an einer Verbindungskante zwischen der Schutzplatte (8) und dem Ladesitz (7) angeordnet ist, und einen zweiten weichen Dichtungskleber, der zwischen der Schutzplatte (8) und einer Seitenwand des Ladeanschlussgehäusekörpers (1) angeordnet ist.

## Revendications

1. Automobile comprenant une structure de couvercle de port de charge automobile, dans laquelle
la structure de couvercle de port de charge automobile comprend un corps de boîte de port de charge (1), un corps de boîte à charnière (2), une plaque de couvercle de boîte à charnière (3) et un actionneur (4) ; dans laquelle le corps de boîte à charnière (2) est relié à une paroi latérale du corps de boîte de port de charge (1), et le corps de boîte à charnière (2) comprend une première cavité de réception ayant une première ouverture ; la plaque de couvercle de boîte à charnière (3) est associée de manière amovible avec le corps de boîte à charnière (2), et la plaque de couvercle de boîte à charnière (3) est conçue pour recouvrir la première ouverture ; une extrémité de l'actionneur (4) est reliée au corps de boîte de port de charge (1), et l'autre extrémité de l'actionneur (4) est conçue pour être intégrée dans une tôle de carrosserie de véhicule (5) d'une automobile ;
dans laquelle la structure de couvercle de port de charge automobile comprend en outre une plaque de couvercle de boîte de port de charge (6) reliée au corps de boîte à charnière (2), la plaque de couvercle de boîte de port de charge (6) est reliée de manière rotative au corps de boîte à charnière (2) par l'intermédiaire d'un élément rotatif, l'élément rotatif est disposé au moins partiellement dans la première cavité de réception, la plaque de couvercle de boîte de port de charge (6) peut se déplacer entre une première position et une seconde position par rapport au corps de boîte de port de charge (1), et le corps de boîte de port de charge (1) est disposé de telle sorte que le corps de boîte de port de charge (1) soit fermé lorsque la plaque de couvercle de boîte de port de charge (6) est située dans la première position par rapport au corps de boîte de port de charge (1), et que le corps de boîte de port de charge (1) soit ouvert lorsque la plaque de couvercle de boîte de port de charge (6) est située dans la seconde position par rapport au corps de boîte de port de charge (1) ;
dans laquelle le corps de boîte de port de charge (1) comprend une seconde cavité de réception ayant une seconde ouverture, et la plaque de couvercle de boîte de port de charge (6) est disposée de telle sorte que la plaque de couvercle de boîte de port de charge (6) recouvre la seconde ouverture lorsque la plaque de couvercle de boîte de port de charge (6) se trouve dans la première position par rapport au corps de boîte de port de charge (1) ;
dans laquelle la structure de couvercle de port de charge automobile comprend en outre une plaque de protection (8), le corps de boîte de port de charge (1) comprend en outre une base correspondant à la seconde ouverture, et la plaque de protection (8) est associée à la base du corps de boîte de port de charge (1) ;
dans laquelle la structure de couvercle de port de charge automobile comprend en outre un siège de charge (7) conçu pour être monté sur la tôle de carrosserie de véhicule (5), la seconde cavité de réception est construite comme un espace de réception pour le siège de charge (7) ;
dans laquelle le siège de charge (7) est conçu pour être relié à la tôle de carrosserie de véhicule (5) par l'intermédiaire d'un élément de fixation, l'élément de fixation est conçu pour être disposé de telle sorte que l'élément de fixation soit protégé par la plaque de protection (8) lorsque la plaque de protection (8) recouvre la base.

2. Automobile selon la revendication 1, dans laquelle la plaque de couvercle de boîte de port de charge (6) comprend une partie de recouvrement (61) faite de l'un quelconque parmi un matériau en fer, un matériau inoxydable et un matériau en aluminium, ainsi qu'une partie de liaison (62) faite de matériau en caoutchouc.

3. Automobile selon la revendication 1, comprenant en outre une première colle souple d'étanchéité disposé au niveau d'un bord de liaison entre la plaque de protection (8) et le siège de charge (7), et une seconde colle souple d'étanchéité disposé entre la plaque de protection (8) et une paroi latérale du corps de boîte de port de charge (1).
